# EUROPÄISCHE PATENTANMELDUNG

(11) **EP 1 353 262 A1**
(43) Veröffentlichungstag der Anmeldung: **15.10.2003**
(21) Anmeldenummer: 02008034.7
(22) Anmeldetag: 10.04.2002
(51) Int. Cl.: G06F 1/20, H05K 7/20

(54) **Wärmeabfuhr bei Geräten mit interner Energieversorgung**

(71) Anmelder: SFC Smart Fuel Cell GmbH, 85649 Brunnthal-Nord (DE)
(72) Erfinder: Müller, Jens, Dr., 81827 München (DE); Preissner, Marcus, Dr., 81543 München (DE); Stefener, Manfred, 81827 München (DE)
(74) Vertreter: Grünecker, Kinkeldey, Stockmair & Schwanhäusser Anwaltssozietät

(57) **Zusammenfassung**

Die Erfindung betrifft die Wärmeabfuhr bei Geräten mit interner Energieversorgungseinrichtung. Es wird eine Gehäusevorrichtung für einen elektrischen Verbraucher und eine Energieversorgungseinrichtung bereitgestellt, speziell ein Laptopgehäuse, mit einer Einrichtung zur Wärmeabfuhr, um die durch die Energieversorgungseinrichtung erzeugte Wärme mittels wenigstens eines strömenden Mediums zu wenigstens einer Außenfläche der Gehäusevorrichtung zu transportieren und über die Außenfläche abzugeben.

## Beschreibung

### Gebiet der Erfindung

Die Erfindung betrifft die Wärmeabfuhr aus Elektrogeräten, die mit einer internen Energieversorgungseinrichtung, insbesondere mit einer Brennstoffzellendeinrichtung, betrieben werden. Ein Hauptanwendungsgebiet der Erfindung sind tragbare Computer.

### Stand der Technik

In der Regel werden elektrische Kleingeräte durch innerhalb der Gehäuse vorgesehene Batterien oder Akkus mit Strom versorgt. Die Zielsetzung bei der Entwicklung bzw. Weiterentwicklung mobiler elektrischer Geräte erfolgt nach zwei wesentlichen Maßgaben: möglichst hohe Leistungskapazität bei gleichzeitig möglichst kompaktem Gerät. Die Forderung nach Kompaktheit bedingt immer kleinere äußere Ausmaße und/oder flache Bauweise, mit dementsprechend kleinen äußeren Oberflächen, über die die durch die Verbraucher im Inneren des Gehäuses erzeugte Wärme abgeführt werden muss. Der Kühlung der Energieversorgungsvorrichtung wurde bislang noch wenig Aufmerksamkeit gewidmet, da sie bei Batterien und Akkus wegen deren geringen Erwärmung keine bedeutende Rolle spielt.

Wenn auch die netzunabhängige Energieversorgung mit Batterien/Akkus zur Zeit immer noch der Regelfall ist, so müssen bei immer leistungsfähigeren Verbrauchern auch immer leistungsfähigere und für den Langzeitbetrieb besser geeignete Energieversorgungseinrichtungen bereitgestellt werden. Mit dem rasant zunehmendem Entwicklungsstand von Brennstoffzellen zeichnet sich daher in letzter Zeit ein verstärkter Trend ab, die Energieversorgung derartiger elektrischer Geräte durch Brennstoffzellen anstelle von Batterien/Akkus durchzuführen.

Bei der Verwendung von Brennstoffzellen für elektronische Kleingeräte ist die Wärmeerzeugung durch die interne Energiequelle aber nicht vernachlässigbar gegenüber der durch die Verbraucher erzeugten Wärme. Es stellt sich hierbei also verstärkt das Problem der Wärmeabfuhr ("Kühlung").

Es soll an dieser Stelle darauf hingewiesen werden, dass in dieser Anmeldung im einklang mit dem in der Technik üblichen Sprachgebrauch die Begriffe "Wärmeabfuhr" und "Kühlen" synonym verwendet werden.

Ein Paradebeispiel für die oben geschilderte Problematik sind tragbare Computer (Notebooks, Laptops, PDAs, Organizer, etc.), die nachfolgend der Einfachheit halber und ohne Einschränkung der Allgemeinheit als Laptops bezeichnet werden. Daher wird die Erfindung im wesentlichen unter Bezugnahme auf das dafür besonders prädestinierte Einsatzfeld der tragbaren Computer erläutert. Es versteht sich aber von selbst, dass die Erfindung nicht hierauf beschränkt ist. Insbesondere sind auch Mobiltelefone, vor allem die neue Generation der intemetfähigen Mobiltelefone, und tragbare Einrichtungen mit Monitoren (tragbare Fernseher, Messgeräte, Medizinische Geräte für das Rettungswesen, etc.) Einsatzgebiete der Erfindung.

Das Herz eines Computers ist die Elektronik und insbesondere der Prozessor, deren ausreichende Kühlung absolute Notwendigkeit besitzt und dementsprechend einen hohen Entwicklungsstand aufweist. Was die tragbaren Computer zum besonders geeigneten Einsatzgebiet macht, ist deren Flachbauweise. Daraus resultiert eine im Vergleich zum Volumen große Oberfläche, die im Betriebszustand durch den ausklappbaren Bildschirm nochmals nahezu verdoppelt wird.

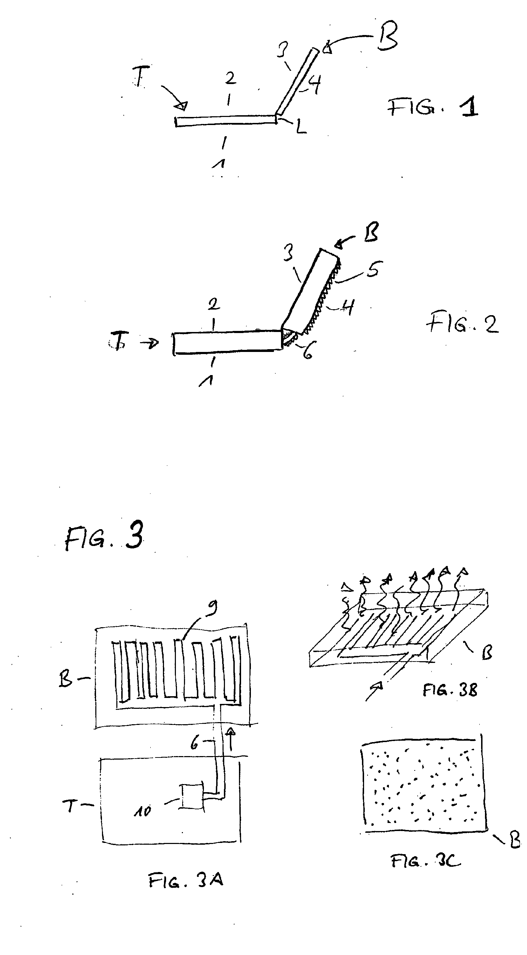

Figur 1 ist eine schematische Ansicht eines herkömmlichen tragbaren Computers mit aufgeklapptem Bildschirmteil. Die vier größenmäßig dominierenden Außenflächen des Laptops sind von 1 bis 4 durchnummeriert: 1 bezeichnet die Bodenfläche der Grundplatte des Laptops, 2 die im wesentlichen von der Tastatur eingenommene Oberseite der Grundplatte des Laptops, 3 und 4 die Vorder- bzw. Rückseite des aufklappbaren Bildschirmdeckels.

Aus unterschiedlichen Gründen spielt bei den Zeit auf dem Markt befindlichen Laptops keine dieser vier Flächen eine wesentliche Rolle bei der Wärmeabfuhr:
Die Bodenfläche 1 ist zur Wärmeabfuhr nur bedingt geeignet, da der Wärmeaustausch mit der Umgebungsluft eine nennenswerte Luftzirkulation erfordert. Die tastaturseitige Fläche 2 wird im wesentlichen von der Tastatur und anderen Bedienungselementen eingenommen, wobei die Tasten- und anderen Bedienungsflächen aus konstruktionsund/oder bedienungstechnischen Gründen zur Wärmeabfuhr nicht gut geeignet sind.

Besonders gut geeignet zur Wärmeabfuhr wäre der aufklappbare Bildschirmdeckel, insbesondere dessen Rückseite 4. Allerdings erfordert dies einen Wärmetransport von dem den Prozessor aufweisenden Gehäuseteil zum Bildschirmdeckel, der in ausreichender Weise nur durch ein strömendes Medium gewährleistet werden kann. Auch wenn es Überlegungen in dieser Richtung gibt, vgl. beispielsweise U.S. Patente Nr. 5,383,340 und Nr. 5,634,531, so haben sich diese Konzepte wegen des großen technischen Aufwands bislang nicht durchsetzen können. Eine Alternative ist das Vorsehen der aktiven elektronischen Verbraucher im Bildschirmdeckel, die ebenfalls im U.S. Patent Nr. 5,383,340, sowie in den U.S. Patenten Nr. 6,181,555 und Nr. 5,982,617 vorgeschlagen wird. Daher werden Prozessoren in der Regel immer noch durch einen Ventilator über ein Lüftungsloch L in der kleinen rückseitigen Außenfläche des Laptopgehäuses gekühlt.

Es ist daher eine Aufgabe der Erfindung, bei elektrischen Geräten mit interner Energieversorgungseinrichtung die durch den Betrieb der Energieversorgungseinrichtung erzeugte Wärme wirksam abzuführen.

Insbesondere ist es eine Aufgabe der Erfindung, die Einsatzmöglichkeiten für Brennstoffzellen zur Energieversorgung elektronischer Geräte zu verbessern.

### Beschreibung der Erfindung

Die oben beschrieben Aufgaben werden erfindungsgemäß durch die Gehäusevorrichtung mit den Merkmalen des Anspruchs 1 gelöst.

Demzufolge umfasst die Gehäusevorrichtung, die zur Aufnahme eines elektrischen Verbrauchers und seiner Energieversorgungseinrichtung dient, eine Einrichtung zur Wärmeabfuhr, um die durch die Energieversorgungseinrichtung erzeugte Wärme mittels wenigstens eines strömenden Mediums zu wenigstens einer Außenfläche der Gehäusevorrichtung zu transportieren und über die Außenfläche abzugeben.

Zur Abfuhr von Wärme von der Energieversorgungseinrichtung zur Außenfläche ist der Wärmetransport mittels eines strömenden Mediums wesentlich effizienter als (elektronische und/oder phononische) Wärmeleitung oder Wärmestrahlung. Die beiden letztgenannten Prozesse können aber unterstützend beitragen, insbesondere bei der gleichmäßigen Verteilung über die Außenfläche (Wärmeleitung) und bei der Abgabe an die Umgebung (Wärmestrahlung).

Da unter "Gehäuse" in der Regel eine starre äußere Hülle mit vorgegebener und unveränderlicher äußerer Form verstanden wird, wird hier der allgemeinere Ausdruck "Gehäusevorrichtung" verwendet, der andeuten soll, dass die Erfindung nicht nur für einfach ausgebildete Gehäuse anwendbar ist, sondern auch für Gehäusevorrichtungen aus mehreren, miteinander verbundenen und gegebenenfalls relativ zueinander bewegliche Gehäuseteilen. Gerade bei solchen Gehäusevorrichtungen lässt sich das erfindungsgemäße Konzept besonders vorteilhaft verwirklichen.

Während in herkömmlichen Gehäusevorrichtungen mit integrierter Energieversorgungseinrichtung der Wärmeabfuhr von der Energieversorgungseinrichtung keine besondere Beachtung gewidmet wird und diese allenfalls durch die natürliche Konvektion der Luft in der Gehäusevorrichtung und Wärmeleitung über Gehäuseteile stattfindet, sieht die Erfindung eine aktiv der Wärmeabfuhr dienende Einrichtung vor, die die Verwendung von Energieversorgungseinrichtungen mit vergleichsweise starker Wärmeentwicklung ermöglicht. Das strömende Medium (bzw. eines dieser strömenden Medien) kann die in der Gehäusevorrichtung vorhandene Luft sein. Bei Brennstoffzellen als Energieversorgungseinrichtungen können die strömenden Medien auch deren Abgase umfassen. In diesen Fällen kann die wärmeabfuhraktive Einrichtung beispielsweise ein oder mehrere Gebläse umfassen, mit denen im Vergleich zur natürlichen Konvektion weit effektivere Luftströmungen bzw. Gasströmungen zur Wärmeabfuhr erzeugt werden können. Es können aber auch speziell zur Wärmeabfuhr bereitgestellte Medien verwendet werden, beispielweise in einem Kühlkreislauf oder einer Heatpipe.

Daher umfasst die Einrichtung zur Wärmeabfuhr in einer besonders bevorzugten Weiterbildung der Erfindung ein in die Gehäusevorrichtung integriertes Leitungssystem für wenigstens ein dem Wärmetransport dienendes strömendes Fluid.

Wenigstens im Bereich der wärmeaktiv wirksamen Außenfläche(n) kann dieses Leitungssystem in die Wand der Außenfläche(n) integriert sein, was konstruktionstechnische Vorteile hat, die Wärmeabgabe an die Außenfläche verbessert und eine effizientere Ausnutzung des Innenraums ermöglicht.

Das Leitungssystem kann im Bereich der Außenfläche eine Verteilungs- und/oder Mäander-Struktur aufweisen, um zur Erhöhung der Effizienz einen möglichst großen Oberflächenanteil in die Wärmeabgabe einzubinden.

In einer vorteilhaften Weiterbildung sind an oder in der Gehäusevorrichtung aufklappbaren und/oder ausziehbaren Einrichtungen vorgesehen, mit deren Hilfe die zur Wärmeabgabe verwendbare Außenfläche der Gehäusevorrichtung vergrößert werden kann.

Diese Weiterbildung ist vor allem dann zweckmäßig, wenn die "intrinsischen" Außenflächen zur Wärmeabgabe nicht geeignet sind oder ihre Fläche dafür nicht ausreichend ist, also insbesondere bei kompakteren Geräten mit kleinen Außenflächen.

Ebenfalls zur Erhöhung der Wärmeabgabewirksamkeit kann es angebracht sein, die zur Wärmeabgabe verwendeten Außenflächen mit oberflächenvergrößernde Strukturmerkmalen zu versehen: die Oberflächenvergrößerung kann makroskopisch durch abstehende Elemente wie Kühllamellen oder durch eine gewellte Oberfläche erreicht werden, aber auch mikroskopisch durch eine erhöhte Oberflächenrauhigkeit und/oder ein poröse Oberflächenstruktur.

Es wird lediglich darauf hingewiesen und bedarf keiner detaillierten Ausführungen, dass zur Erhöhung der Wärmeabgabewirksamkeit unter Umständen auch der Beitrag durch die Wärmeabstrahlung in Betracht zu ziehen ist. Es kann also durchaus zweckmäßig sein, die Außenflächen mit einem die Abstrahlung verbessernden Farbanstrich zu versehen.

Alternativ oder zusätzlich dazu kann die Einrichtung zur Wärmeabfuhr wenigstens einen Ventilator (Gebläse) umfassen, um die Luftzirkulation - und damit den Wärmeabfuhr an die Umgebung - an wenigstens einer der zur Wärmeabgabe verwendeten Außenflächen zu verbessern.

Das erfindungsgemäße Konzept lässt sich auf jedes Elektrogerät mit integrierter Energieversorgung anwenden. Besonders zweckmäßig ist es aber vor allem dann, wenn diese Energieversorgungseinrichtung eine Brennstoffzelleneinrichtung ist oder eine solche umfasst, da der Wärmeintrag durch eine Brennstoffzelleneinrichtung für gewöhnlich deutlich höher ist als bei vergleichbaren Energieversorgungseinrichtungen wie Primäroder Sekundärzellen.

In einer vorteilhaften Weiterbildung ist die Einrichtung zur Wärmeabfuhr so ausgebildet, dass sie auch zum Abführen der durch den elektrischen Verbraucher erzeugten Wärme geeignet ist. So kann beispielsweise das Leitungssystem für das strömende Fluid am elektrischen Verbraucher vorbeigeführt werden und über geeignete wärmetauschende Einrichtungen die vom elektrischen Verbraucher erzeugte Wärme aufnehmen und abführen.

Ein besonders bevorzugtes Einsatzgebiet der Erfindung ist das der tragbaren Computer, deren Gehäusevorrichtung gemäß den oben beschriebenen Merkmalen nachgerüstet werden kann oder - was i.d.R. vorzuziehen ist - von vornherein nach diesen Maßgaben konzipiert wird. Abweichend von herkömmlichen tragbaren Computern können dabei mehr oder weniger starke Variationen in der Anordnung der Gehäuseteile vorzuziehen sein, von denen einige als bevorzugte Ausführungsformen in der nachfolgenden Figurenbeschreibung genannt werden.

Insbesondere bei herkömmlichen tragbaren Computern ist als zur Wärmeabfuhr genutzte Außenfläche besonders die Rückseite des Flachbildschirms geeignet, da diese einerseits vergleichsweise groß ist und andererseits keine weitern funktionellen Aufgaben besitzt. Unter Umständen kann aber auch die Vorderseite des Bildschirms zur Wärmeabgabe verwendet werden.

Bei einer besonders bevorzugten Weiterbildung, die insbesondere die Ausbildung eines Leitungssystems deutlich vereinfacht, wird die Energieversorgungseinrichtung in dem den Bildschirm umfassenden Gehäuseteil untergebracht. In diesem Fall muss die Fluidführung nicht über verschiedene, relativ zueinander bewegbare (schwenkbare) Gehäuseteile erfolgen.

Vorzugsweise ist die Einrichtung zur Wärmeabfuhr so ausgebildet, dass zusätzlich zur Kühlung der Energieversorgungseinrichtung auch eine wirksame Abfuhr der durch die Computerelektronik (insbesondere der Prozessoreinheit) erzeugten Wärme erreicht wird.

So kann beispielsweise im Fall einer DMFC Brennstoffzelle als Energieversorgungseinrichtung deren Abluft mit einer Temperatur von etwa 60°C verwendet werden, um den auf etwas höherer Temperatur befindlichen Prozessor zu kühlen.

Die Grundprinzipien der Erfindung werden nachfolgend unter Bezugnahme auf die beigefügten Figuren anhand eines besonders geeigneten Anwendungsgebietes der Erfindung erläutert, nämlich das der mit Brennstoffzellen betriebenen tragbaren Computer.

Es zeigen:
- Fig. 1: eine schematische Ansicht eines herkömmlichen tragbaren Computers;
- Fig. 2: eine schematische Ansicht eines ersten bevorzugten Ausführungsbeispiels der vorliegenden Erfindung;
- Fig. 3-5: schematische Detailansichten zur praktischen Umsetzung der der Erfindung zugrundeliegenden Konzepte;
- Fig. 6: eine schematische Ansicht eines zweiten bevorzugten Ausführungsbeispiels der vorliegenden Erfindung;
- Fig. 7: eine schematische Ansicht eines dritten bevorzugten Ausführungsbeispiels der vorliegenden Erfindung;
- Fig. 8: eine schematische Ansicht eines vierten bevorzugten Ausführungsbeispiels der vorliegenden Erfindung;
- Fig. 9: eine schematische Ansicht eines fünften bevorzugten Ausführungsbeispiels der vorliegenden Erfindung;
- Fig. 10: eine schematische Ansicht eines fünften bevorzugten Ausführungsbeispiels der vorliegenden Erfindung.

Auf Fig. 1 wurde schon in der Beschreibungseinleitung eingegangen. Sie zeigt eine schematische Ansicht eines aufgeklappten tragbaren Computers mit einem auf der Tischunterlage aufliegendem Gehäuseteil T und einem schräg stehendem Bildschirmdeckel B. Die Figur dient lediglich zur Veranschaulichung der strukturellen Gegebenheiten, die der Anwendung der Erfindung auf tragbare Computer zugrunde liegen. Neben der Tastatur auf der Oberseite 2 beinhaltet das Gehäuseteil T im Inneren in der Regel alle wesentlichen Komponenten der Elektronik des Computers, sowie die dazu notwendige Energieversorgungseinrichtung.

Bei einem herkömmlichen akkubetriebenen Laptop tragen die vier großen Außenflächen 1-4 des aufgeklappten Gehäuses zur Wärmeabfuhr der im Laptopbetrieb erzeugten Wärme zwar bei, dieser Beitrag ist aber nicht ausreichend. Daher wird der Prozessor für gewöhnlich mittels eines Ventilators über ein Lüftungsloch L in der Rückseite des Gehäuseteils T gekühlt.

Figur 2 zeigt eine schematische Ansicht eines ersten bevorzugten Ausführungsbeispiels der vorliegenden Erfindung. Im Unterschied zum Laptop von Figur 1 wird das in Figur 2 skizzierte Laptop durch eine im Gehäuseteil T vorgesehene Brennstoffzelleneinrichtung betrieben. Um die durch die Brennstoffzelleneinrichtung erzeugte Wärme in ausreichendem Ausmaß aus dem Gehäuseteil T abführen zu können, wird die große Oberfläche der freistehendem Deckeleinheit B genutzt.

Hierzu muss die im Gehäuseteil T erzeugte Wärme zum Bildschirmdeckel B transportiert werden. Bevorzugt erfolgt der Transport über ein strömendes Medium, das im Gehäuseteil T die von der Energieversorgungseinrichtung erzeugte Wärme aufnimmt, diese vom Gehäuseteil T über Strömungseinrichtungen, von denen in der Figur nur die schematisch skizzierten flexiblen Schläuche 6 eingezeichnet sind, zum Deckel B führt, und dort an die Umgebung abgibt.

Speziell bei dem Fall, dass die Energieversorgungseinrichtung eine Brennstoffzelleneinrichtung umfasst, können die zur Wärmeabfuhr verwendeten Fluide beim Betrieb der Brennstoffzelleneinrichtung verwendete Fluide und/oder dabei anfallende Reaktionsprodukte umfassen.

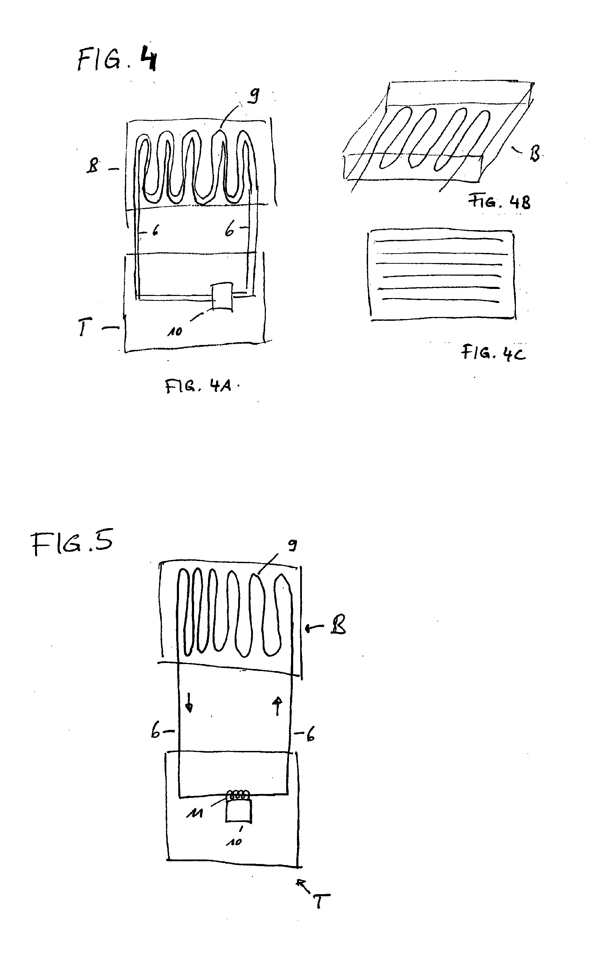

Zwei entsprechende Ausführungen sind in den Figuren 3A-3C und 4A-4C (jeweils in verschiedenen Ansichten) skizziert.

Zuerst zu Figur 3: Wie in Fig. 3A angedeutet, strömt von der im Gehäuseteil T vorgesehenen Brennstoffzelle 10 erwärmtes (gasförmiges oder flüssiges) Fluid über die Leitung 6 zur Deckeleinheit B, wo es mittels einer Verteilerstruktur 9 in der Deckeleinheit verteilt wird, so dass eine möglichst große Oberfläche zur Wärmeabfuhr an die Umgebung genutzt werden kann, was in Fig. 3B angedeutet ist. Dabei kann die Wärmeabfuhr gegebenenfalls - in Abhängigkeit von der Art und dem Aggregatszustand des Fluids - dadurch erfolgen, dass das Fluid selbst an die Umgebung abgegeben wird, was beispielsweise im Falle von Luft, Kohlendioxid, Wasserdampf relativ problemlos möglich ist. In diesem Fall weist die für die Abgabe vorgesehene Fläche, die in Aufsicht in Fig. 3C skizziert ist, bevorzugt eine poröse Struktur auf.

Besonders geeignet zur Wärmeabfuhr ist aber auch eine Kreislaufströmung zwischen Wärmequelle (Brennstoffzelle 10) und Wärmesenke (Deckeleinheit B), die schematisch in Figur 4A angedeutet ist. Diese Ausführung ist vor allem dann bevorzugt, wenn beim Betrieb der Brennstoffzelle Fluide verwendet werden, die sowohl eingangseitig zugeführt werden, als auch (u.U. in geänderter Zusammensetzung) ausgangsseitig anfallen. Beispiele für derartige Fluide sind Wasser und Luft. Zur effizienten Nutzung der Außenfläche der Deckeleinheit B ist in oder unmittelbar unter der Außenwand eine Verteilungsstruktur 9 vorgesehen, beispielsweise in Form einer mäandemden Strömungsführung (vgl. Fig. 4A, 4B). Zur Verbesserung des Wärmeaustauschs mit der Umgebung können oberflächenvergrößernde Strukturierungen vorgesehen werden: beispielsweise kann die Außenfläche eine gewellte Struktur aufweisen und/oder mit Lamellen (angedeutet in Fig. 4c) versehen sein.

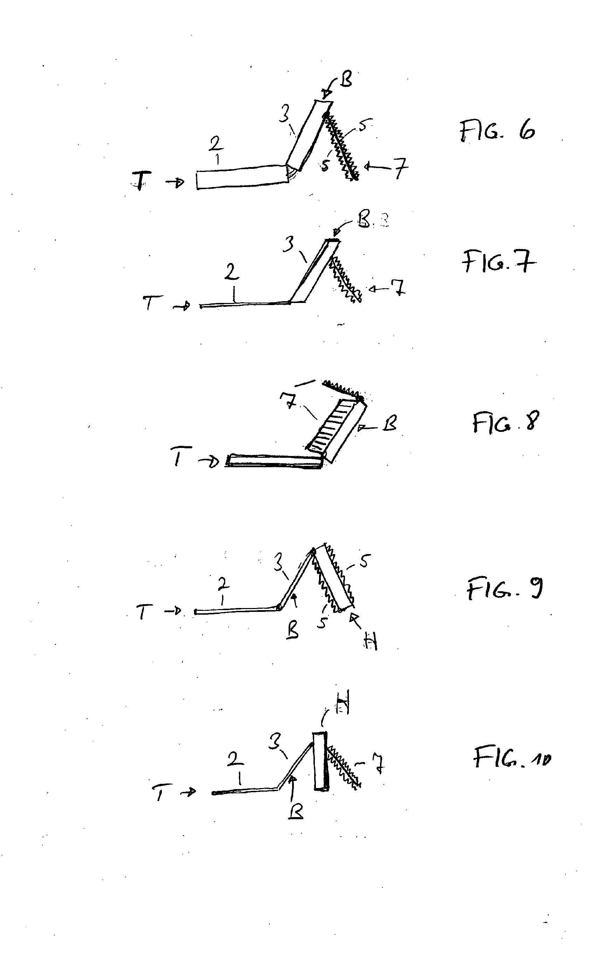

Der geschlossene Kühlkreislauf kann auch von der Energieversorgungseinrichtung unabhängig sein, was den Vorteil hat, dass die im relevanten Temperaturbereich geeignetsten Fluide oder Fluidmischungen zur Wärmeabfuhr verwendet werden können. Eine solche Anordnung ist schematisch in Fig. 5 veranschaulicht. Hier erfolgt die Wärmeabfuhr über einen separaten, eigens dafür vorgesehenen geschlossenen Kreislauf, wobei das in diesem Kreislauf strömende Fluid über einen Wärmetauscher 11 die von der E-nergieerzeugungseinrichtung 10 erzeugte Wärme aufnimmt, im Falle einer Brennstoffzelleneinrichtung beispielsweise in einem Gegenstromverfahren mit den erwärmten Fluiden der Brennstoffzelleneinrichtung.

Die in den Figuren 4 und 5 beschriebene Art der Wärmeabfuhr kann bei geeigneten Fluiden bzw. Fluidmischungen als Zwei-Phasen-Kreislauf ausgebildet sein, bei dem das flüssige Medium unter Wärmeaufnahme verdampft, im gasförmigen Zustand von der Brennstoffzelle 10 zur Verteilungsstruktur 9 strömt, dort unter Wärmeabgabe kondensiert, und anschließend in kondensierter Form wieder zur Brennstoffzelle 10 zurückgeführt wird.

Bei der Beschreibung der skizzierten Beispiele wurde davon ausgegangen, dass die an der Oberfläche stattfindende natürliche Konvektion zur Wärmeabgabe an die Umgebung ausreicht. Falls aber erforderlich, können Ventilatoren vorgesehen sein, die die Konvektion verstärken. Wenn das den Bildsschirm aufweisende Gehäuseteil B zur Kühlung verwendet wird (wie beispielsweise in Zusammenhang mit Fig. 2 beschrieben), so kann die Bildschirmseite 3 von der als Kühlfläche wirkenden Rückseite 4 thermisch isoliert werden. Falls dies nicht notwendig ist, oder wenn - bei niedrigen Außentemperaturen - gar die Beheizung des Bildschirms vorteilhaft ist, kann auch die Bildschirmseite 3 der Deckeleinheit B zur Wärmeabgabe beitragen.

Figur 6 ist eine schematische Ansicht eines zweiten bevorzugten Ausführungsbeispiels der Erfindung. Im Unterschied (wahlweise auch zusätzlich) zu dem in Figur 2 gezeigten Ausführungsbeispiel ist hier eine separate Kühlfläche 7 vorgesehen, die von der Deckeleinheit B ausgeklappt werden kann und beidseitig mit dem Kühleffekt verstärkenden Lamellen versehen sein kann. Im gezeigten Beispiel kann diese Kühlfläche 7 auf der Auflage abgestützt werden, und so zur Stützung der Deckeleinheit B beitragen. Letzteres kann vor allem dann wünschenswert sein, wenn die Brennstoffzelleneinrichtung in die Deckeleinheit B integriert wird.

Alternativ oder zusätzlich zu den in den Fig. 6 und 8-11 skizzierten Ausführungsbeispielen können auch separate Kühlflächen vorgesehen sein, die seitlich oder nach vorne ausgeklappt werden können, wie dies schematisch in Fig. 7 angedeutet ist. Diese Kühlflächen können unter Wärmeabgabe zur Erwärmung der Umgebungsluft im Frontbereich der Bildschirmfläche genutzt werden, was die Einsatzmöglichkeiten bei niedrigen Außentemperaturen verbessert. Gleichzeitig können diese Flächen als Sichtblenden, als Schutz gegen störenden seitlichen Lichteinfall, und als Schutz des Bildschirms gegen weitere Umwelteinflüsse (z.B. Regentropfen, Spritzwasser) verwendet werden.

Eine die Bildschirmeinheit B abstützende Wirkung der Kühlfläche 7 ist vor allem dann zweckmäßig, wenn - wie durch das Ausführungsbeispiel von Fig. 8 veranschaulicht werden soll - sowohl die Energieversorgungseinrichtung (bspw. Brennstoffzelleneinrichtung), als auch die wesentlichen Komponenten der Elektronik in den den Bildschirm aufweisenden Gehäuseteil B integriert sind. In diesem Fall muss die flach auf der Unterlage aufliegende Einheit T nur noch die zur manuellen Bedienung notwendigen Einrichtungen, insbesondere die Tastatur, aufweisen, und kann daher sehr flach ausgebildet werden, etwa als sog. Touchpad.

Figur 9 zeigt eine auf ähnlichen Prinzipien wie Fig. 7 basierende Ausführungsform, bei der die Elektronik und die Energieversorgung in einem Gehäusehauptteil H integriert sind. Von diesem Gehäusehauptteil H sind die Bildschirm- und Tastatureinheiten B und T ausklappbar und können als dünne Schichten oder Pads ausgebildet sein. Das Hauptgehäuse H, das sowohl Brennstoffzelleneinrichtung als auch Elektronik aufweist, steht in diesem Falle schräg und kann wahlweise mit einer oder beiden großen Gehäuseflächen zur Wärmeabgabe beitragen. Im skizzierten Beispiel sind beide großen Gehäuseflächen mit Lamellen 5 zur Wärmeabgabe versehen. Der Vorteil dieser Ausführungsform liegt darin, dass die Fluidführung nicht über schwenkbare Achsen erfolgen muss.

Figur 10 zeigt eine alternative Ausführungsform, die ebenfalls die Prinzipien des Ausführungsbeispiels von Figur 7 verwirklicht. An einem aufrecht stehenden Hauptgehäuse H sind auf einer Seite die gemeinsam ausklappbaren Bildschirmeinheit B und Tastatureinheit T angebracht, während auf der anderen Seite die ebenfalls ausklappbare, und eine Stützfunktion erfüllende Kühlfläche 7 angebracht ist.

Die vorliegende Erfindung eignet sich besonders gut für solche Vorrichtungen, die aufklappbare großflächige Gehäuseteile besitzen. Das Ziel der Erfindung ist es, die durch die interne Energieversorgungseinrichtung eines Elektrogeräts erzeugte Wärme auf effiziente Art und Weise abzuführen. Es versteht sich aber von selbst, dass zusätzlich dazu auch die von internen Verbrauchern (Prozessoren, Motoren, etc.) erzeugte Wärme abgeführt werden kann. Das Einsatzgebiet kann auf Vorrichtungen ohne großflächige Gehäuseaußenflächen erweitert, wenn diese mit eigens zum Zwecke der Wärmeabfuhr vorgesehenen aufklappbaren und/oder ausziehbaren Flächen oder anderen Einrichtungen (z.B. Kühlspiralen) ausgerüstet werden.

## Patentansprüche

1. Gehäusevorrichtung für einen elektrischen Verbraucher und eine Energieversorgungseinrichtung, umfassend:
eine Einrichtung zur Wärmeabfuhr, um die durch die Energieversorgungseinrichtung erzeugte Wärme mittels wenigstens eines strömenden Mediums zu wenigstens einer Außenfläche der Gehäusevorrichtung zu transportieren und über die Außenfläche abzugeben.

2. Gehäusevorrichtung nach Anspruch 1, bei welcher die Einrichtung zur Wärmeabfuhr ein in die Gehäusevorrichtung integriertes Leitungssystem für wenigstens ein dem Wärmetransport dienendes strömendes Fluid umfasst.

3. Gehäusevorrichtung nach einem der vorangegangenen Ansprüche, mit aufklappbaren und/oder ausziehbaren Einrichtungen, um die zur Wärmeabgabe verwendbare Außenfläche der Gehäusevorrichtung zu vergrößern.

4. Gehäusevorrichtung nach einem der vorangegangenen Ansprüche, bei welcher wenigstens eine der zur Wärmeabgabe verwendeten Außenflächen zur Verbesserung der Wärmeabgabe oberflächenvergrößernde Strukturmerkmale aufweist.

5. Gehäusevorrichtung nach Anspruch 4, in welchem die oberflächenvergrößernde Strukturmerkmale eine erhöhte Oberflächenrauhigkeit und/oder Kühllamellen und/oder eine Oberflächenwellung und/oder ein poröses Oberflächenmaterial umfassen.

6. Gehäusevorrichtung nach einem der vorangegangenen Ansprüche, in welchem die Einrichtung zur Wärmeabfuhr wenigstens einen Ventilator umfasst, um die Luftzirkulation an wenigstens einer der zur Wärmeabgabe verwendeten Außenflächen zu verbessern.

7. Gehäusevorrichtung nach einem der vorangegangenen Ansprüche, in welchem die Energieversorgungseinrichtung eine Brennstoffzelleneinrichtung umfasst.

8. Gehäusevorrichtung nach einem der vorangegangenen Ansprüche, in welchem die Einrichtung zur Wärmeabfuhr so ausgebildet ist, dass auch die durch den elektrischen Verbraucher erzeugte Wärme abführbar ist.

9. Tragbarer Computer mit einer Gehäusevorrichtung nach einem der vorangegangenen Ansprüche.

10. Tragbarer Computer nach Anspruch 9, in welchem die zur Wärmeabfuhr genutzte Außenfläche die Vorder- und/oder Rückseite eines Flachbildschirms umfasst.

11. Tragbarer Computer nach einem der Ansprüche 9 oder 10, in welchem die Energieversorgungseinrichtung in dem den Bildschirm umfassenden Gehäuseteil vorgesehen ist.

12. Tragbarer Computer nach einem der Ansprüche 9 bis 11 in Kombination mit Anspruch 8, in welchem die Einrichtung zur Wärmeabfuhr so ausgebildet ist, dass auch die durch die Computerelektronik erzeugte Wärme abführbar ist
